Europäisches Patentamt

European Patent Office

Office européen des brevets

(19)

(11) Veröffentlichungsnummer : **0 131 944**
**B1**

(12)    # EUROPÄISCHE PATENTSCHRIFT

(45) Veröffentlichungstag der Patentschrift :
25.05.88

(21) Anmeldenummer : 84108338.9

(22) Anmeldetag : 16.07.84

(51) Int. Cl.⁴ : **G 01 N 15/00**, G 01 N 27/00

(54) Verfahren und Vorrichtung zur Unterscheidung von in einem Medium befindlichen Teilchen oder Partikeln.

(30) Priorität : 18.07.83 DE 3325843

(43) Veröffentlichungstag der Anmeldung :
23.01.85 Patentblatt 85/04

(45) Bekanntmachung des Hinweises auf die Patenterteilung : 25.05.88 Patentblatt 88/21

(84) Benannte Vertragsstaaten :
AT BE CH FR GB IT LI LU NL SE

(56) Entgegenhaltungen :
Z. NATURFORSCH., Band 37c, 1982, Seiten 908-915;
W.M. ARNOLD et al.: "Rotating-field-induced rotation
and measurement of the membrane capacitance of
single mesophyll cells of Avena sativa"
THE JOURNAL OF MEMBRANE BIOLOGY, Band 67,
Nr. 1, 1982, Seiten 13-26, Springer-Verlag Inc., New
York, US; C. HOLZAPFEL et al.: "Rotation of cells in
an alternating electric field: theory and experimental
proof"
Z. NATURFORSCH., Band 36c, 1981, Seiten 173-177;
U. ZIMMERMANN et al.: "Rotation of cells in an
alternating electric field: the occurrence of a resonance frequency"

(73) Patentinhaber : Kernforschungsanlage Jülich Gesellschaft mit beschränkter Haftung
Postfach 1913
D-5170 Jülich 1 (DE)

(72) Erfinder : Arnold, William Michael
Adalbertstrasse 116-118
D-5100 Aachen (DE)
Erfinder : Zimmermann, Ulrich, Prof.
Röntgenstrasse 11
D-8700 Würzburg (DE)

## Beschreibung

Die Erfindung bezieht sich auf ein Verfahren zur Unterscheidung von in einem Medium befindlichen, um eine zur Drehachse eines elektrischen Drehfeldes parallele Drehachse rotierbaren, wenigstens zwei Teilchen- oder Partikelgruppen zugehörenden Teilchen bzw. Partikeln (insbesondere Zellen).

Aus Z. Naturforsch. 37 c, 908-915 (1982), « Rotating-Field-Induced Rotation and Measurement of the Membrane Capacitance of Single Mesophyll Cells of Avena sativa », W. M. Arnold and U. Zimmermann, ist bekannt, daß einzelne Zellen, hier Protoplasten, in einem elektrischen Drehfeld, das beispielsweise von vier jeweils um 90° versetzt angeordneten Elektroden ausgeht, in Rotation gebracht werden können. Es ist außerdem bekannt, daß einzelne Zellen einer bestimmten Zellart bei einer bestimmten Frequenz des Drehfeldes (der sog. charakteristischen Frequenz) in maximale Rotationsgeschwindigkeit versetzt werden können.

Bei Anwendung des bekannten Verfahrens können Zellen, für die unterschiedliche, charackteristische Drehfrequenzen für die jeweilige maximale Rotationsgeschwindigkeit maßgeblich sind, dadurch voneinander unterschieden werden, daß die Frequenz des Drehfeldes auf die für eine Zellgruppe charakteristische Frequenz eingestellt wird. Die unterschiedlichen Zellen können dann an ihrer unterschiedlichen Rotationsgeschwindigkeit voneinander unterschieden werden.

Bei dieser Verfahrensweise kann jedoch im Einzelfall die Unterscheidung aufgrund der unterschiedlichen Rotationsgeschwindigkeit recht schwierig sein, so daß nur ein geübtes Auge den Unterschied zu erkennen vermag.

Es ist Aufgabe der Erfindung, ein Verfahren der eingangs bezeichneten Art zu schaffen, das die Unterscheidung von Teilchen aufgrund deren Rotationsverhalten gegenüber dem vorgenannten Unterscheidungsverfahren für das Bedienungspersonal erleichtert, wobei das Verfahren auch auf Teilchen nichtbiologischer Art anwendbar sein soll. Es ist ferner Aufgabe der Erfindung, eine Vorrichtung zur Durchführung des Verfahrens zu schaffen.

Diese Aufgabe wird gemäß der Erfindung dadurch gelöst, daß die Teilchen oder Partikeln, von denen sich die Teilchen oder Partikeln der einen Gruppe durch spezifische, das Rotationsverhalten beeinflussende, elektrische und/oder mechanische Eigenschaften auszeichnen, zwei elektrischen Drehfeldkräften mit entgegengesetztem Drehsinn derart ausgesetzt werden, daß sich die Teilchen oder Partikeln der einen Teilchengruppe von den Teilchen oder Partikeln der anderen Teilchengruppe durch ihr Rotationsverhalten unterscheiden.

Das Verfahren gemäß der Erfindung ist einem weiten Bereich der Technik anwendbar, beispielsweise, wo es um die Unterscheidung von Teilchen eines Pulvers geht und optische Methoden, so die Untersuchung unter dem Mikroskop, nicht hinreichend ist. So kann es beispielsweise von Interesse sein, $BaTiO_3$-Partikeln von infolge des Herstellungsverfahrens für $BaTiO_3$ ebenfalls vorhandenen $TiO_2$-Teilchen zu unterscheiden und eine Abschätzung des %-Anteils von $TiO_2$-Teilchen in einer Charge vornehmen zu können.

Im biologischen, pharmakologischen und medizinischen Bereich ist es von Interesse, Zellen voneinander zu unterscheiden. Beispielsweise dann, wenn Zellen eine Zellwand aufweisen, wie pflanzliche Zellen, Hefezellen und Bakterien und — bei gleicher Größe der Zellen — die Zellen trotz sonstiger Unterschiede unter dem Mikroskop nicht zu unterscheiden sind. So können beispielsweise eine Zellwand aufweisende Zellen der gleichen Art und Gattung auch dann unter dem Mikroskop nicht unterschieden werden, wenn ihre Membran durch Detergentien, Umweltschadstoffe, wie Schwermetalle u. dgl. geschädigt worden ist. Aufgrund von Veränderungen in der Membran der Zellen weisen derartige Zellen jedoch ein anderes Rotationsverhalten auf als nichtgeschädigte Zellen der gleichen Art. Die geschädigten Zellen können daher von den nichtgeschädigten Zellen aufgrund ihres anderen Rotationsverhaltens unterschieden werden. Auch können junge von alten, oder lebende von toten Zellen der gleichen Art anhand ihres Rotationsverhaltens unterschieden werden.

Auch können bei Anwendung des Verfahrens gemäß der Erfindung Zellen verschiedener Bakterienstämme, die optisch nicht oder nur schwer zu unterscheiden sind, anhand ihres unterschiedlichen Rotationsverhaltens unterschieden werden.

Wie sich gezeigt hat, haben auch Teilchen bzw. Partikeln nichtbiologischer Art eine maximale Rotationsgeschwindigkeit bei einer charakteristischen Drehfrequenz. Diese charakteristische Frequenz ist zwar wie für eine bestimmte Zellart von weiteren Parametern abhängig, so von den Umgebungsbedingungen für die Teilchen, der Leitfähigkeit des Mediums, in welchem sich die Teilchen befinden, und der Temperatur des Mediums. Für eine Unterscheidungsmessung kommt es jedoch nur auf das unterschiedliche Rotationsverhalten der zu unterscheidenden Teilchen bei sonst gleichen Umgebungsbedingungen an. Die Leitfähigkeit des Mediums, die zweckmäßigerweise in einem Bereich von 5 bis 500 µS/cm, insbesondere 5 bis 50 µS/cm liegt, ist daher für die Unterscheidung der Teilchen selbst nur von untergeordneter Bedeutung. Bei zu unterscheidenden Zellen ist die Temperatur des Mediums in erster Linie danach einzustellen, daß die Zellfunktionen nicht beeinträchtigt und die Zellen nicht geschädigt werden.

Eine vorteilhafte Variante des Verfahrens gemäß der Erfindung, die eine genauere Erfassung der Unterschiede im Rotationsverhalten der Teilchen ermöglicht, besteht darin, daß die jeweilige Drehfrequenz und die Intensität der beiden Drehfelder wahlweise so bemessen werden, daß sich entweder die auf die Teilchen oder Partikeln der einen Gruppe oder die auf die Teilchen oder Partikeln der anderen Gruppe wirkenden Feldkräfte gerade kompensieren und dadurch die den kompensierten Drehfeldkräften ausgesetzten Teilchen oder Partikeln nicht in Rotation versetzt werden. Dabei wird die Frequenz der Drehfelder auf unterschiedliche Werte eingestellt, wobei auch die Intensität der Drehfelder unterschiedlich sein kann.

Bei der zuletzt genannten Verfahrensweise sind ruhende Teilchen von rotierenden Teilchen zu unterscheiden, was gegenüber der oben angegebenen Verfahrensvariante zu einer größeren Sicherheit in der Unterscheidung führt. Die natürliche Streubreite der Eigenschaften der Teilchen und damit auch im Rotationsverhalten kann allerdings dazu führen, daß langsam rotierende Teilchen von schneller rotierenden Teilchen zu unterscheiden sind.

Eine Vereinfachung in der Handhabung der zuletzt genannten Verfahrensvariante ergibt sich dann, wenn die Intensität der Drehfelder gleich ist, da dann zur Einstellung der optimalen Unterscheidungsbedingungen nur die Drehfrequenzen geändert werden müssen. Diese Ausführungsvariante ist vorteilhafterweise in der Weise auszuführen, daß die Drehfrequenz des einen Drehfeldes das 1/n-fache und die Drehfrequenz des anderen Drehfeldes das n-fache derjenigen charakteristischen Drehfrequenz betragen, die jeweils für die nicht in Rotation zu versetzenden Teilchen bzw. Partikeln maßgeblich ist.

Diese Ausführungsregel basiert auf der Feststellung, daß die Rotationsgeschwindigkeit der Teilchen von der Drehfrequenz (bei sonst gleichbleibenden Parametern) eine logarithmische Abhängigkeit aufweist. Das bedeutet im vorliegenden Fall, daß die Rotationsgeschwindigkeit der Teilchen die gleiche ist wie bei Drehfrequenzen, die durch Multiplikation bzw. durch Division der charakteristischen Frequenz mit bzw. durch eine bestimmte Zahl n erhalten worden ist. Im praktischen Fall der Durchführung dieser Verfahrensvariante heißt dies jedoch nicht, daß die charakteristische Frequenz bekannt sein muß. Vielmehr ist es bei Verwendung einer Einrichtung, bei der durch Wahl einer bestimmten Drehfrequenz jeweils zwei Drehfelder erzeugt werden, deren Drehfrequenzen den vorgenannten Bedingungen entsprechen, lediglich erforderlich, die « bestimmte » Drehfrequenz solange zu variieren, bis eine solche Einstellung der Drehfrequenz erreicht ist, die der charakteristischen Drehfrequenz entspricht und bei der die Teilchen der einen Gruppe aufhören zu rotieren. Auf diese Weise können diese zu unterscheidenden Teilchen leicht erkannt werden.

Eine weitere, sehr vorteilhafte Ausführungsvariante des Verfahrens gemäß der Erfindung, bei deren Durchführung das Erkennen des unterschiedlichen Rotationsverhaltens der Zellen gegenüber den bisher angegebenen Verfahrensvarianten noch weiter erleichtert wird, besteht darin, daß die Drehfrequenz und die Intensität der Drehfelder so bemessen werden, daß sich die resultierenden Drehfeldkräfte auf die Teilchen oder Partikeln insofern unterschiedlich auswirken, als die unterschiedlichen Gruppen zugehörenden Teilchen bzw. Partikeln mit unterschiedlichem Drehsinn rotieren.

Auch bei dieser Verfahrensvariante ist es zweckmässig, daß die den entgegengesetzten Drehsinn aufweisenden elektrischen Drehfelder gleiche Intensität haben.

Auch bei der zuletzt genannten Verfahrensweise ist es vorteilhaft, in der Weise vorzugehen, daß die Drehfrequenz des einen Drehfeldes das 1/n-fache und die Drehfrequenz des anderen Drehfeldes das n-fache einer Frequenz betragen, die zwischen den für die unterschiedlichen Teilchen- bzw. Partikelgruppen maßgeblichen charakteristischen Frequenzen liegt. Aus den oben angegebenen Gründen ist es auch hierbei nicht erforderlich, daß der Fachmann die charakteristische Drehfrequenz der zu unterscheidenden Teilchen kennt, da er durch Variieren der « bestimmten » Drehfrequenz ohne weiteres zu einer Einstellung der beiden Drehfelder gelangt, bei der die zu unterscheidenden Teilchen mit unterschiedlichem Drehsinn rotieren.

Für die Durchführung der verschiedenen Ausführungsvarianten kann es zweckmäßig sein, daß die entgegengesetzt gerichteten elektrischen Drehfelder zeitlich aufeinanderfolgend auf die Teilchen bzw. Partikeln einwirken, wobei die Schaltfrequenz so hoch bemessen ist, daß keine störenden Oszillationen der Teilchen eintreten. Da die Schaltfrequenz im kHz-Bereich liegt, sind Oszillationen der Teilchen zwar mit dem Auge nicht zu erkennen, sie können sich jedoch in einer störenden Unschärfe der Teilchenkonturen zeigen. Diese durch die Oszillationen bedingten Störungen sollten durch Wahl einer hinreichend hohen Schaltfrequenz vermieden werden.

Es kann ferner zweckmäßig sein, daß die entgegengesetzt gerichteten elektrischen Drehfelder gleichzeitig auf die Teilchen einwirken. Oszillationen der Teilchen können dabei nicht auftreten.

Zur Durchführung des Verfahrens gemäß der Erfindung ist eine Vorrichtung geeignet, bei der mindestens drei Elektroden, die, zwischen sich einen Zwischenraum für eine die Teilchen oder Partikeln, insbesondere Zellen, enthaltende Kammer oder einen Behälter bildend oder in die zur Aufnahme der Teilchen bzw. Partikeln vorgesehene Kammer hineinragend, derart angeordnet sind, daß der Zwischenraum bzw. Partikeln vorgesehene Kammer hineinragend, derart angeordnet sind, daß der Zwischenraum bzw. die Kammer einem von den Elektroden ausgehenden elektrischen Drehfeld ausgesetzt ist sowie durch eine an die Elektroden anschließbare Einrichtung zur Erzeugung zweier elektrischer Drehfelder mit entgegengesetztem Drehsinn und jeweils variabler Drehfrequenz. Zweckmäßigerweise ist dabei die Intensität der Drehfelder variabel. Sie sollte dabei in einem solchen Bereich liegen, daß in der Kammer elektrische Feldstärken von etwa 1 bis 1 000 V/cm erzielt werden. Der Frequenzbereich sollte im Bereich zwischen 1 Hz und 1 GHz liegen. In vielen Anwendungsfällen genügt jedoch ein Bereich von 1 Hz bis 500 kHz.

Eine weitere zweckmäßige Ausführungsform der Vorrichtung gemäß der Erfindung besteht darin, daß die Einrichtung so ausgeführt ist, daß die die beiden Drehfelder erzeugenden elektrischen Spannungen abwechselnd in kurzer Schaltfolge an allen Elektroden anliegen.

Sind wenigstens sechs Elektroden vorgesehen, dann kann eine zweckmäßige Ausführungsform der Einrichtung darin bestehen, daß die die beiden Drehfelder erzeugenden elektrischen Spannungen an verschiedenen, mindestens je drei Elektroden anliegen. In diesem Fall kann davon abgesehen werden, die beiden Drehfelder alternierend einzuschalten.

Vorteilhaft ist ferner eine Ausführungsform der Vorrichtung gemäß der Erfindung, bei der die Einrichtung so ausgeführt ist, daß bei Wahl einer bestimmten Drehfrequenz die Einrichtung zwei die beiden Drehfelder erzeugende elektrische Spannungen abgibt, wobei die Frequenz des einen Drehfeldes das 1/n-fache und die Frequenz des anderen Drehfeldes das n-fache der bestimmten Drehfrequenz beträgt und wobei die Intensität der beiden Drehfelder gleich ist.

Bei dieser Ausführungsform der Vorrichtung gemäß der Erfindung wird von der logarithmischen Abhängigkeit der Rotationsgeschwindigkeit der Teilchen bzw. Partikeln von der Drehfrequenz Gebrauch gemacht. Sie zeichnet sich durch eine besonders leichte Handhabung aus, da nur eine einzige Frequenz zu variieren ist, die dann — je nach der durchzuführenden Verfahrensvarianten — auf die charakteristische Frequenz einer der beiden zu unterscheidenden Teilchen- bzw. Partikelgruppen oder auf eine Drehfrequenz zwischen den charakteristischen Drehfrequenzen der beiden zu unterscheidenden Gruppen einzustellen ist.

Bei der zuletzt angegebenen Vorrichtung ist ferner noch zweckmäßig, daß die Einrichtung so ausgeführt ist, daß die Zahl n in einem vorgegebenen Bereich, der etwa zwischen 1 und 50 liegt, wählbar ist. Der kleinste einstellbare Wert für n liegt oberhalb 1.

Zweckmäßig ist, daß die elektrischen Drehfelder mit sinusförmigen Spannungen erzeugt werden. Es ist jedoch auch ohne weiteres möglich, die Drehfelder durch rechteckförmige Spannungen oder durch pulsweise abgegebene Spannungen oder Spannungen einer anderen Form zu erzeugen.

Eine besondere Verwendung der Vorrichtung gemäß der Erfindung besteht in der Unterscheidung von Zellinhaltstoffe, wie Proteine und/oder Glycoproteine, Hormone oder sog. Wachstums-Faktoren sezernierenden Zellen von Zellinhaltstoffe nicht sezernierenden Zellen der gleichen Art oder Gattung.

Diese besondere Verwendung der Vorrichtung basiert auf der Entdeckung, daß Zellinhaltstoffe, wie Proteine und/oder Glycoproteine oder Hormone oder Wachstums-Faktoren ausscheidende Zellen ein anderes Rotationsverhalten im elektrischen Drehfeld zeigen — was auf Änderungen in der Membran der Zellen zurückgeführt werden kann — als nicht sezernierende Zellen der gleichen Art oder Gattung.

In einer Vielzahl von Anwendungsfällen im biologischen, pharmakologischen und medizinischen Bereich besteht das Bedürfnis, Zellinhaltstoffe sezernierender Zellen von Zellen der gleichen Art und Gattung unterscheiden zu können.

So ist es beispielsweise für die Gewinnung von monoklonalen Antikörpern von erheblicher Bedeutung, zur Bildung und Abgabe von Antikörpern stimulierte Lymphozyten aus einer stimulierte Lymphozyten und nichtstimulierte Lymphozyten enthaltenden Suspension zu bestimmen :

Bestimmte Lymphozyten bilden gegen Fremdstoffe im Organismus Antikörper (Glycoproteine), z. B. gegen ein Fremdeiweiß, das in die Blutbahn injiziert worden ist. Fusioniert man solche zur Bildung und Abgabe von Antikörpern stimulierten Lymphozyten mit einer Tumorzelle, wie der Myelomzelle, so besteht die Chance, daß sich eine sog. Hybridomzelle bildet, die die Eigenschaft beider Elternteile besitzt. Diese Zelle produziert Antikörper, und zwar spezifisch nur gegen den betreffenden Fremdstoff (sog. monoklonale Antikörper). Sie ist praktisch unsterblich und läßt sich im Gegensatz zu einer normalen ausdifferenzierten Zelle, wie dem Lymphozyten, permanent in Nährmedien vermehren.

Da jedoch von der Vielzahl der im Lymphstrom befindlichen Lymphozyten nur eine sehr geringe Anzahl stimuliert werden, aber möglichst nur die stimulierten Lymphozyten der Fusion zugeführt werden sollten, müssen die stimulierten von den nichtstimulierten Lymphozyten in einem Selektionsverfahren getrennt werden. Hierbei macht es jedoch schon Schwierigkeiten, die stimulierten Lymphozyten zu erkennen, da sie sich unter dem Mikroskop von den nichtstimulierten Lymphozyten nicht unterscheiden.

Als weiteres Beispiel sei außerdem genannt, daß einige Mikroorganismen in der Lage sind, durch Ausscheidung gewisser Zellinhaltsstoffe (hauptsächlich Glycoproteine) lebende Kulturhefen zu lysieren. Diese Toxine werden als « Killerfaktoren » bezeichnet. « Killerhefen » können bei der Bierherstellung Schwierigkeiten verursachen. Bereits bei einem geringen Kontaminationsgrad bewirken sie Änderungen der Vergärung und der Qualität des Bieres.

Die Existenz und Auswirkung von Killerreaktionen wurden sowohl bei Brauereihefen, Weinhefen und Backhefen als auch bei anderen Arten von Zellgattungen, wie z. B. Hansenula, Pichia, Deberyomyces, Kluyveromyces, Candida und Torulopsis festgestellt.

In den genannten und vielen anderen Fällen kommt es darauf an, zunächst einmal die sezernierenden Zellen zu erkennen, um weitere Maßnahmen einleiten zu können. Diese können darin bestehen, daß, wie beispielsweise im Falle der stimulierten Lymphozyten, diese Zellen anschließend ausgesondert werden. Im Falle der Killerhefezellen dient das Erkennen solcher Zellen zunächst zur Überwachung des Gärprozesses. Dies wiederum kann dazu führen, daß Maßnahmen zur Vermeidung der Kontamination eingeleitet werden.

Darüberhinaus ist die Vorrichtung gemäß der Erfindung in vorteilhafter Weise zur Messung von das Rotationsverhalten von Teilchen bzw. Partikeln biologischer und nichtbiologischer Art bestimmenden elektrischen und gegebenenfalls von diesen ableitbaren mechanischen Größen einsetzbar. Solche Größen sind bei Zellen beispielsweise die charakteristische Drehfrequenz und — bei bekanntem Durchmesser der Zellen — deren Membrankapazität, der Membranwiderstand und die Innenleitfähigkeit der Zellen. Aufgrund dieser zu messenden Größen kann beispielsweise auch der schädigende Einfluß von Umweltstoffen auf die Zellen erkannt werden.

Bei Teilchen nichtbiologischer Art kann es von Interesse sein, die Homogenität der Teilchen anhand der Messung der Dielektrizitäts-Konstanten und des spezifischen Widerstandes zu bestimmen. Bei Teilchen, die einen Hohlraum aufweisen, können aufgrund des Rotationsverhaltens der Teilchen Aussagen über den Innendurchmesser der Teilchen gemacht werden.

Bei der Herstellung von Pulver aus $BaTiO_3$ kann beispielsweise anhand der Messung der charakteristischen Frequenz eine Aussage über die Dichte der Partikeln, damit der Dielektrizitäts-Konstanten einer Charge der Partikeln gemacht werden, wodurch eine Qualitätskontrolle ermöglicht wird.

In der Zeichnung sind zwei Ausführungsbeispiele der Vorrichtung gemäß der Erfindung schematisch dargestellt und werden im folgenden näher erläutert. In der Zeichnung sind ferner Diagramme zur Verdeutlichung des Verfahrens gemäß der Erfindung wiedergegeben.

Es zeigen

Figur 1 eine Ausführungsform der Vorrichtung mit vier Elektroden und einer mit den Elektroden verbundenen Einrichtung, die nach einer bestimmten Schaltfolge zwei entgegengesetzt gerichtete Drehfelder erzeugt,

Figur 2 eine Ausführungsform der Vorrichtung mit acht Elektroden und einer mit den Elektroden verbundenen Einrichtung, mittels der über jeweils vier Elektroden zwei entgegengesetzt gerichtete, konstant anliegende Drehfelder erzeugt werden,

Figur 3 Diagramme zur Verdeutlichung der Durchführung einer Varianten des Verfahrens gemäß der Erfindung.

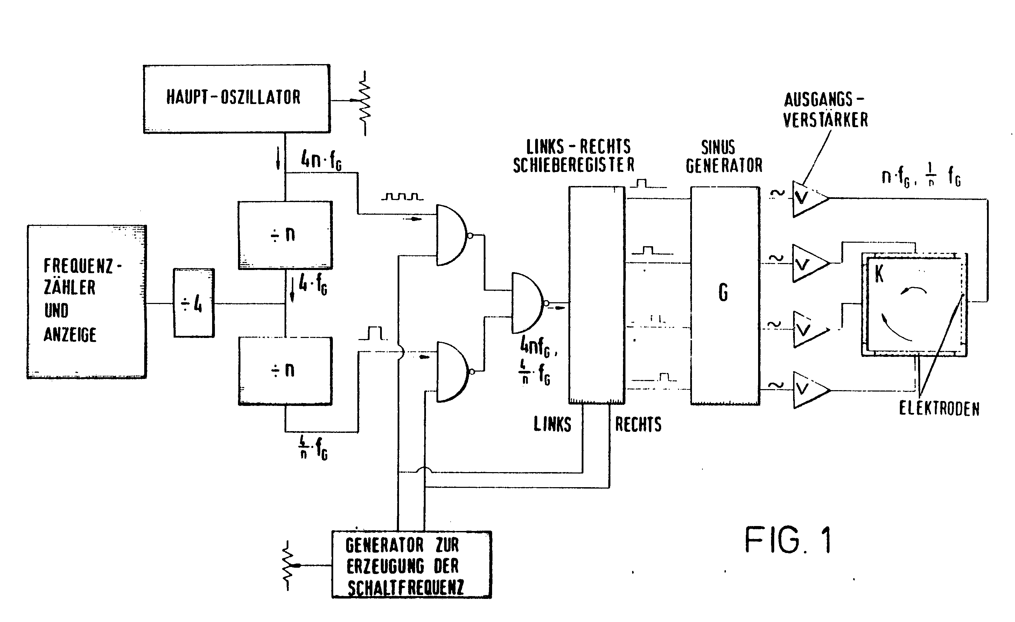

Die in Figur 1 dargestellte Vorrichtung besteht aus einer Kammer K mit vier Elektroden und einer Einrichtung zur Erzeugung von zwei entgegengesetzt gerichteten Drehfeldern.

Die vier Elektroden sind auf einer in der Zeichnung nicht dargestellten Grundplatte aus elektrisch nichtleitendem Material so angeordnet, daß sie die seitlichen Wände der zur Aufnahme der Teilchen, beispielsweise Zellen, vorgesehenen Kammer K bilden. Die Elektroden sind an den Ecken der Kammer miteinander und an der Grundpatte mittels eines elektrisch isolierenden Klebemittels verklebt.

Die Elektrodenlänge und damit die Länge der Seitenwände der Kammer beträgt 1 mm, die Höhe der Elektroden 0,2 mm. Die quadratische, nach oben offene Kammer K hat somit das Seitenmaß von 1 mm und die Höhe von 0,2 mm.

Die aus einer Platinfolie bestehenden Elektroden sind in der aus Figur 1 ersichtlichen Weise mit den Ausgangsverstärkern V des Sinusgenerators G verbunden. Wie aus Figur 1 ferner ersichtlich ist, besteht die Einrichtung außer aus dem Sinusgenerator G und dessen Ausgangsverstärkern V noch aus weiteren Einheiten, die dazu dienen, zwei um jeweils 90° phasenverschobene Spannungen zur Erzeugung der beiden entgegengesetzt gerichteten Drehfelder zu erzeugen. Ausgehend von dem Hauptoszillator, dessen Frequenz einstellbar ist, wird dabei eine Spannungsfolge einer n-fachen und einer 1/n-fachen Frequenz erzeugt. Entsprechend der eingestellten Schaltfrequenz des « Generators zur Erzeugung der Schaltfrequenz » werden die beiden Spannungsfolgen abwechselnd auf die Elektroden gegeben.

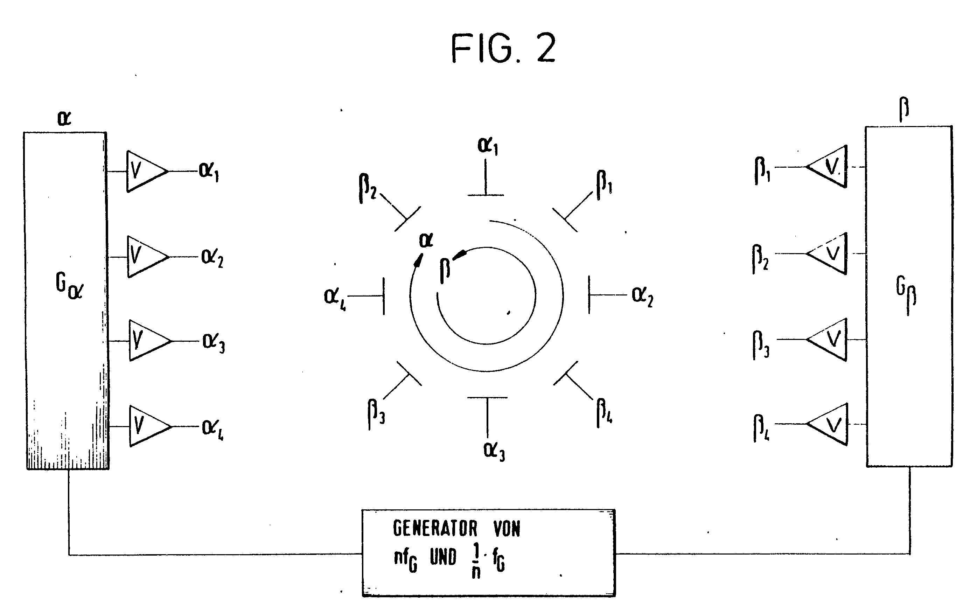

Bei der in Figur 2 dargestellten Einrichtung sind insgesamt acht Elektroden vorgesehen. Diese bilden einen Zwischenraum, in dem eine in der Zeichnung nicht dargestellte Kammer vorgesehen ist. Die Elektroden sind entsprechend den Bezeichnungen $\alpha_1$ bis $\alpha_4$ mit den Ausgangsverstärkern V eines Generators $G_\alpha$ und entsprechend den Bezeichnungen $\beta_1$ bis $\beta_4$ mit den Ausgangsverstärkern eines Generators $G_\beta$ verbunden. Die von den Verstärkern ausgehenden Spannungen sind um jeweils 90° phasenverschoben, so daß sich bei der vorgesehenen Verbindung der Elektroden mit den Ausgangsverstärkern der in der Zeichnung durch Pfeile dargestellten Drehsinn der beiden Drehfelder ergibt. Die von den Generatoren $G_\alpha$ und $G_\beta$ erzeugten Spannungen sind sinusförmig. Ihre Frequenzen entsprechen dem n-fachen bzw. 1/n-fachen einer einstellbaren Generatorfrequenz $f_G$. Die Zahl n ist über den Generator von $nf_G$ und $1/n$, $f_G$ einstellbar.

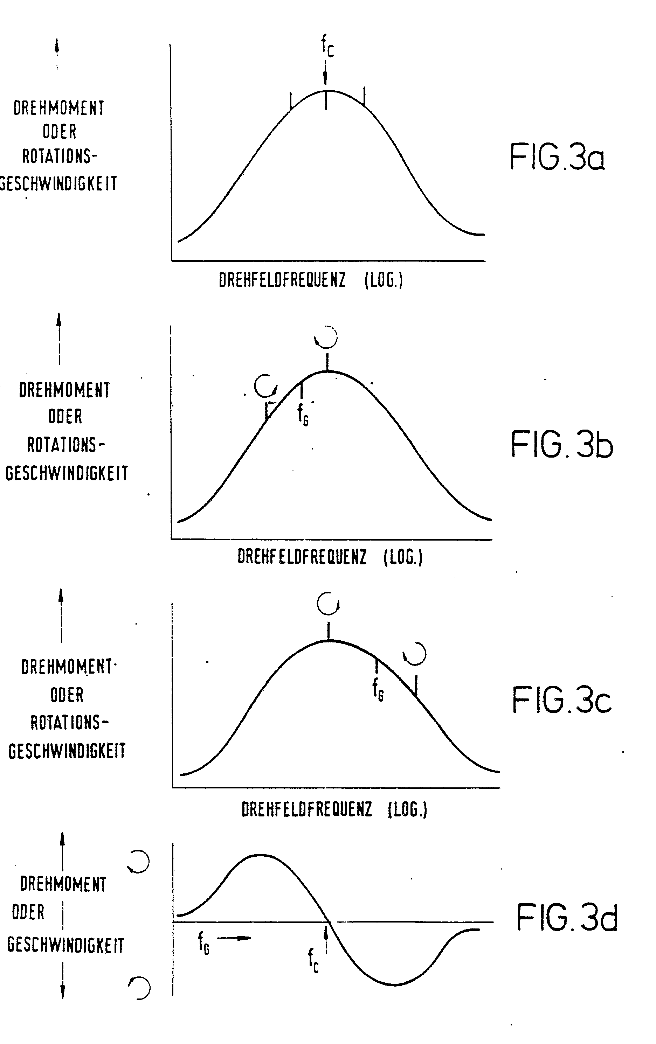

In Figur 3 sind Diagramme zur Verdeutlichung der Varianten des Verfahrens gemäß der Erfindung wiedergegeben, bei dem die Teilchen den Kräften zweier Drehfelder ausgesetzt werden, deren Frequenz das n-fache bzw. 1/n-fache einer einstellbaren Generatorfrequenz betragen.

Der in den Diagrammen a bis c gezeigte Kurvenverlauf (logarithmische Abhängigkeit der Frequenz des auf ein Teilchen wirkenden Drehfeldes vom Drehmoment bzw. der Rotationsgeschwindigkeit des Teilchens) gilt dabei für die Rotation des Teilchens unter dem Einfluß eines Drehfeldes. Die maximale Rotationsgeschwindigkeit des durch das Drehfeld in Rotation versetzten Teilchens liegt, wie aus der Darstellung a ersichtlich ist, bei der Frequenz $f_c$. Die Frequenzen der beiden Drehfelder, die dem n-fachen bzw. dem 1/n-fachen der Frequenz $f_c$ entsprechen, liegen bei den Markierungen oberhalb und unterhalb der Frequenz $f_c$.

Wird die Frequenz $f_G$ des Generators entsprechend der Darstellung in Figur 3a gleich der charakteristischen Frequenz $f_c$ für das Teilchen gewählt, dann kompensieren sich die Kräfte der beiden

5

Drehfelder. Das Teilchen bleibt in Ruhe.

Bei den in den Figuren 3b bis bis 3c gezeigten unterschiedlichen Einstellungen der Generatorfrequenz $f_G$ rotiert das Teilchen unter dem Einfluß zweier sich nicht kompensierender Drehfelder mit jeweils anderem Drehsinn.

In Figur 3d ist das Rotationsverhalten des Teilchens in Abhängigkeit von der Frequenz des Generators (bei jeweils mitlaufenden Frequenzen der beiden Drehfelder) dargestellt. Wie aus dem Diagramm ersichtlich, rotiert das Teilchen oberhalb bzw. unterhalb der Frequenz $f_c$ mit unterschiedlichem Drehsinn.

Allgemeines zu den nachfolgenden Ausführungsbeispielen 1 und 2 :

Es wurden stimulierte B-Lymphozyten erzeugt, indem eine Maus durch Schafs-Erythrozyten immunisiert wurde. Die der Maus entnommene Lymphozytenfraktion enthielt die stimulierten Lymphozyten zusammen mit nichtstimulierten Lymphozyten.

Die Lymphozytenfraktion wurde in eine Schicht von Erythrozytem vom Schaf gegeben und später die stimulierten, d. h. den Antikörper sezernierenden Lymphozyten durch Mikropipettieren wieder entnommen. Die stimulierten Lymphozyten konnten dabei daran erkannt werden, daß sich um sie herum eine Gruppe lysierter Erythrozyten gebildet hatte (nach der in den « Annales of Institute Pasteur, 1975 » (Zagury u. Mitarbeiter) beschriebenen Methode).

Auf diese Weise wurden stimulierte Lymphozytem, die einen Antikörpter gegen die Erythrozyten von Schaf sezernierten, gewonnen. Ein Anteil dieser stimulierten Lymphozyten wurde mit mindestens der gleichen Menge nichtstimulierter Lymphozyten, die ebenfalls mittels Mikropipette der Erythrozytenschicht entnommen worden waren, vermischt.

Die Lymphozytenmischung wurde, bevor sie in die Rotationskammer K gegeben wurde, dreimal in einem Medium geringer Leitfähigkeit (0,3 M Mannit mit Spuren von Natriumchlorid als Elektrolyt) gewaschen.

Die nachfolgenden Ausführungsbeispiele wurden mittels einer Vorrichtung der in Figur 1 dargestellten Art durchgeführt.

## Ausführungsbeispiel 1

Unterscheidung von stimulierten und nicht stimulierten Lymphozyten

Etwa 10 µl einer das Lymphozytengemisch enthaltenden Suspension wurde in die Rotationskammer K gegeben.

Die Leitfähigkeit der Suspension betrug 18,4 µS/cm, die Temperatur betrug 35 °C.

Die Suspension wurde einem elektrischen Drehfeld einer Intensität von etwa 100 V/cm ausgesetzt.

Die Frequenz der beiden Drehfelder betrug jeweils das 2-fache bzw. das 1/2-fache der eingestellten Frequenz des Generators (bzw. des Oszillators).

Die stimulierten Lymphozyten konnten unter dem Mikroskop daran erkannt werden, daß sie bei einer Drehfrequenz von 38,3 ± 5,5 kHz nicht mehr rotierten. Sie konnten damit von den übrigen Lymphozyten unterschieden werden, die bei einer Drehfrequenz von etwa 24,5 ± 4,8 kHz nicht mehr rotierten.

Bei einer Einstellung der Generatorfrequenz auf einen Wert zwischen den beiden angegebenen Werten rotierten die unterschiedlichen Lymphozyten mit entgegengesetztem Drehsinn.

Die aufgrund ihres Rotationsverhaltens als stimulierte Lymphozyten erkannten Lymphozyten wurden durch Mikropipettieren der Rotationskammer entnommen und zur Kontrolle wieder in eine Schicht von Schafs-Erythrozyten gegeben. Die Kontrolluntersuchung bestätigte, daß es sich um stimulierte Lymphozyten handelte.

## Ausführungsbeispiel 2

Unterscheidung von stimulierten und nicht stimulierten Lymphozyten

Wie in Ausführungsbeispiel 1 beschrieben, wurde eine Mischung von stimulierten und nichtstimulierten Lymphozyten einem elektrischen Drehfeld ausgesetzt. Die Leitfähigkeit der die Lymphozyten enthaltenden Suspension betrug jedoch 5,2 µS/cm.

Auch in diesem Falle wurden die stimulierten Lymphozyten an ihrem Rotationsverhalten erkannt. Die entsprechende Drehfrequenz betrug etwa 12,3 ± 2,8 kHz. Die Drehfrequenz, bei der die nichtstimulierten Lymphozyten nicht mehr rotierten, betrug etwa 7,1 ± 1,1 kHz.

## Ausführungsbeispiel 3

Unterscheidung von lebenden und toten Hefezellen

Hefezellen, Saccharomyces cerevisiae (strain 93), wurden aus einem Nährmedium in destilliertes Wasser gegeben. Ein Teil der Hefezellen wurde für 5 Minuten auf 85 °C erhitzt. Diese Zellen wurden anschließend zentrifugiert und gewaschen.

Eine Fraktion der erhitzten Hefezellen wurde mit unbehandelten Hefezellen gemischt. Unter dem Mikroskop war ein Unterschied nicht zu erkennen.

Das Gemisch wurde in eine Lösung gegeben, deren Leitfähigkeit 2 μS/cm betrug. Die Temperatur betrug 20 °C.

Etwa 10 μl der das Zellgemisch enthaltenden Lösung wurden in die Rotationskammer gegeben und den beiden elektrischen Drehfeldern (n = 2) ausgesetzt. Die erhitzten (toten) Zellen konnten unter dem Mikroskop an ihrem Rotationsverhalten erkannt und von den nicht behandelten Zellen unterschieden werden. Die charakteristische Frequenz für die erhitzten Zellen lag bei 500 ± 200 kHz, die für die unbehandelten Zellen bei einer Generatorfrequenz ≥ 3 MHz.

Bei einer Kontrolluntersuchung, bei der jeweils nur eine Gruppe der Zellen in der Rotationskammer dem elektrischen Drehfeld ausgesetzt wurde, war nur jeweils eine der angegebenen charakteristischen Frequenzen meßbar.

## Ausführungsbeispiel 4

Unterscheidung von lebenden und toten Bakterienzellen

Der Versuch wurde mit Zellen von Bacillus megaterium durchgeführt. Diese Zellen haben die Eigenschaft, sich zu Ketten (bestehend aus Mutter- und Tochterzellen) zusammenzuschließen. Bei der Durchführung des Verfahrens wird daher die Rotation einer Kette von Zellen unter dem Mikroskop beobachtet.

Ein Teil der Zellen wurde für 5 Minuten auf 85 °C erhitzt. Dabei blieben die Ketten erhalten.

Wie im Ausführungsbeispiel 3 beschrieben, wurde eine Mischung von erhitzten und von unbehandelten Zellen hergestellt. Diese Mischung enthielt somit Ketten von lebenden neben Ketten von toten Zellen.

Das Gemisch wurde einer Natriumchloridlösung (Leitfähigkeit 260 μS/cm, Temperatur 20 °C) gegeben. Unter dem Mikroskop konnte ein Unterschied der in der Lösung befindlichen Zellen nicht erkannt werden.

Etwa 10 μl der das Zellgemisch enthaltenden Lösung wurde in die Rotationskammer gegeben und den beiden elektrischen Drehfeldern (n = 2) ausgesetzt. Die unterschiedlich behandelten Zellen konnten dabei an ihrem Rotationsverhalten erkannt und unterschieden werden. Die charakteristische Frequenz für die erhitzten Zellketten lag bei 70 Hz, die für die unbehandelten Zellketten bei 35 Hz.

Eine Kontrollmessung der in Ausführungsbeispiel 3 angegebenen Art bestätigte das Ergebnis.

## Ausführungsbeispiel 5

Unterscheidung von durch Detergentien geschädigter Zellen von nicht geschädigten Zellen

In einer aus destilliertem Wasser bestehenden Ausgangslösung befanden sich Zellen von Saccharomyces cerevisiae (strain 93). Ein Teil derselben wurde für eine Stunde in eine Lösung gegeben, die 0,09 % HDTAB (Hexadecyltrimethylammoniumbromid) enthielt. Die Zellen wurden danach zentrifugiert und viermal in destilliertem Wasser gewaschen.

Es wurde wieder eine Mischung aus behandelten und unbehandelten Zellen hergestellt (Leitfähigkeit der Lösung 2 μS/cm, Temperatur 20 °C). Die Zellen waren durch Ansehen unter dem Mikroskop nicht zu unterscheiden.

Eine Untersuchung in der Rotationskammer ergab ein unterschiedliches Rotationsverhalten der beiden Zellgruppen.

Die charakteristische Frequenz für die durch das Detergenz geschädigten Zellen lag bei 80 ± 10 kHz, während die charakteristische Frequenz der nicht geschädigten Zellen bei ≥ 3 MHz lag. Dabei war festzustellen, daß die Drehung der Zellen im gleichen Drehsinn der auf sie einwirkenden Feldkräfte erfolgte.

Für einen anderen Frequenzbereich, bei dem die Teilchen entgegen dem Drehsinn des auf sie einwirkenden Drehfeldes rotierten, wurde für die geschädigten Zellen eine charakteristische Frequenz von 200 Hz und für die nicht geschädigten Zellen eine Frequenz von 10 ± 2 kHz gemessen.

Eine Kontrollmessung der in Ausführungsbeispiel 3 angegebenen Art bestätigte das Ergebnis.

## Ausführungsbeispiel 6

Unterscheidung von durch einen Umweltschadstoff geschädigten Zellen von nicht geschädigten Zellen

Von der in Ausführungsbeispiel 5 angegebenen Ausgangslösung wurde ein Teil der Zellen für eine Stunde in eine Lösung gegeben, die 100 ppm $HgCl_2$ enthielt. Nach dem Zentrifugieren der Zellen und viermaligem Waschen wurde wieder eine Mischung von behandelten und nicht behandelten Zellen hergestellt. Die Leitfähigkeit der das Gemisch enthaltenden Lösung betrug 2 μS/cm, die Temperatur 20 °C.

Ein Unterschied der im Gemisch befindlichen Zellen war unter dem Mikroskop nicht zu erkennen.

7

Eine Untersuchung in der Rotationskammer ergab ein unterschiedliches Rotationsverhalten der beiden Zellengruppen.

Die charakteristische Frequenz für die geschädigten Zellen lag bei 120 ± 20 kHz, die charakteristische Frequenz der nicht geschädigten Zellen lag bei 400 bis 500 Hz.

Eine Kontrollmessung der in Ausführungsbeispiel 3 angegebenen Art bestätigte das Ergebnis.

## Ausführungsbeispiel 7

Unterscheidung von Hefezellen zweier verschiedener Gattungen

Es wurde ein Gemisch von Hefezellen Saccharomyces cerevisiae (strain 93) und Hansenula II sp (unbekannte Spezies) hergestellt. Unter dem Mikroskop konnten die den unterschiedlichen Gruppen zugehörigen Zellen nur mit Schwierigkeit voneinander unterschieden werden.

Das Zellgemisch wurde in destilliertes Wasser gegeben (Leitfähigkeit 2 $\mu$S/cm, Temperatur 20 °C).

Die Zellen konnten durch ihr Rotationsverhalten voneinander unterschieden werden. Die charakteristische Frequenz für die Zellen Hansenula II lag bei 100-300 kHz, die charakteristische Frequenz für die Zellen Saccharomyces cerevisiae lag bei $\geq$ 3 MHz.

## Ausführungsbeispiel 8

Unterscheidung von Teilchen nichtbiologischer Art

Ein aus $BaTiO_3$ und $TiO_2$ bestehendes Teilchengemisch eines mittleren Durchmessers der Teilchen von 2 $\mu$m wurde in destilliertem Wasser fünfmal gewaschen und dann in Wasser gegeben, das Spuren von NaCl enthielt (Leitfähigkeit 2,6 $\mu$S/cm, Temperatur 20 °C).

Die Teilchen konnten durch ihr Rotationsverhalten voneinander unterschieden werden. Die charakteristische Frequenz der $BaTiO_3$-Teilchen lag bei 7,8 ± 1,0 kHz, die der $TiO_2$-Teilchen bei 135 ± 10 kHz. Die unterschiedlichen Teilchen rotierten dabei im entgegengesetzten Drehsinn.

Ein Kontrollversuch bestätigte das Ergebnis.

Zu bemerken ist noch, daß $BaTiO_3$ eine Dielektrizitätskonstante von etwa 2000, $TiO_2$ dagegen von etwa 100 aufweist.

## Ausführungsbeispiel 9

Unterscheidung von Teilchen nichtbiologischer Art

Entsprechend Ausführungsbeispiel 8 wurde ein Gemisch von $BaTiO_3$ und $TiO_2$-Teilchen untersucht.

Die Leitfähigkeit der das Gemisch enthaltenden Lösung betrug 5,2 $\mu$S/cm, die Temperatur 20 °C. Die charakteristische Frequenz für die $BaTiO_3$-Teilchen betrug 16,0 ± 2,2 kHz, die für die $TiO_2$-Teilchen 280 ± 25 kHz.

Auch in diesem Falle rotierten die Teilchen mit unterschiedlichem Drehsinn.

Ein Kontrollversuch bestätigte das Ergebnis.

## Patentansprüche

1. Verfahren zur Unterscheidung von in einem Medium befindlichen um eine zur Drehachse wenigstens eines elektrischen Drehfeldes parallele Drehachse rotierbaren, wenigstens zwei Teilchen- oder Partikelgruppen zugehörenden Teilchen bzw. Partikeln, insbesondere Zellen, dadurch gekennzeichnet, daß die Teilchen oder Partikeln, von denen sich die Teilchen oder Partikeln der einen Gruppe durch spezifische, das Rotationsverhalten beeinflussende, elektrische und/oder mechanische Eigenschaften von der anderen auszeichnen, durch zwei elektrische Drehfelder erzeugten Drehfeldkräften mit entgegengesetztem Drehsinn derart ausgesetzt werden, daß sich die Teilchen oder Partikeln der einen Teilchengruppe von den Teilchen oder Partikeln der anderen Teilchengruppe durch ihr Rotationsverhalten unterscheiden.

2. Verfahren nach Anspruch 1, dadurch gekennzeichnet, daß die jeweilige Drehfrequenz und die Intensität der Drehfelder wahlweise so bemessen werden, daß sich entweder die auf die Teilchen oder Partikeln der einen Gruppe oder die auf die Teilchen oder Partikeln der anderen Gruppe wirkenden Feldkräfte gerade kompensieren und dadurch die den kompensierten Drehfeldkräften ausgesetzten Teilchen oder Partikeln nicht in Rotation versetzt werden.

3. Verfahren nach Anspruch 2, dadurch gekennzeichnet, daß die den entgegengesetzten Drehsinn aufweisenden elektrischen Drehfelder gleiche Intensität haben.

4. Verfahren nach Anspruch 3, dadurch gekennzeichnet, daß die Drehfrequenz des einen Drehfeldes das 1/n-fache und die Drehfrequenz des anderen Drehfeldes das n-fache derjenigen charakteristischen Drehfrequenz betragen, die jeweils für die nicht in Rotation zu versetzenden Teilchen oder Partikeln

# 0 131 944

maßgeblich ist.

5. Verfahren nach Anspruch 1, dadurch gekennzeichnet, daß die Drehfrequenz und die Intensität der Drehfelder so bemessen werden, daß sich die resultierenden Drehfeldkräfte auf die Teilchen bzw. Partikeln insofern unterschiedlich auswirken, als die unterschiedlichen Gruppen zugehörenden Teilchen oder Partikeln mit unterschiedlichem Drehsinn rotieren.

6. Verfahren nach Anspruch 5, dadurch gekennzeichnet, daß die den entgegengesetzten Drehsinn aufweisenden elektrischen Drehfelder gleiche Intensität haben.

7. Verfahren nach Anspruch 6, dadurch gekennzeichnet, daß die Drehfrequenz des einen Drehfeldes das 1/n-fache und die Drehfrequenz des anderen Drehfeldes das n-fache einer Frequenz betragen, die zwischen den für die unterschiedlichen Teilchen- bzw. Partikelgruppen maßgeblichen charakteristischen Frequenzen liegt.

8. Verfahren nach einem der Ansprüche 1 bis 7, dadurch gekennzeichnet, daß die entgegengesetzt gerichteten elektrischen Drehfelder zeitlich aufeinanderfolgend auf die Zellen einwirken, wobei die Schaltfrequenz so hoch bemessen ist, daß keine störenden Oszillationen der Teilchen bzw. Partikel eintreten.

9. Verfahren nach einem der Ansprüche 1 bis 7, dadurch gekennzeichnet, daß die entgegengesetzt gerichteten elektrischen Drehfelder gleichzeitig auf die Teilchen bzw. Partikel einwirken.

10. Vorrichtung zur Durchführung des Verfahrens gemäß einem der Ansprüche 1 bis 9, gekennzeichnet durch mindestens drei Elektroden, die, zwischen sich einen Zwischenraum für eine die Zellen enthaltende Kammer (K) oder einen Behälter bildend oder in die zur Aufnahme der Teilchen bzw. Partikel vorgesehene Kammer hineinragend, derart angeordnet sind, daß der Zwischenraum bzw. die Kammer einem von den Elektroden ausgehenden elektrischen Drehfeld ausgesetzt ist sowie durch eine an die Elektroden anschließbare Einrichtung zur Erzeugung zweier mittels elektrischen Spannungen erzeugter, elektrischer Drehfelder mit entgegengesetztem Drehsinn und jeweils variabler Drehfrequenz.

11. Vorrichtung gemäß Anspruch 10, dadurch gekennzeichnet, daß die Intensität der Drehfelder variabel ist.

12. Vorrichtung gemäß einem der Ansprüche 10 und 11, dadurch gekennzeichnet, daß die Einrichtung so ausgeführt ist, daß die die beiden Drehfelder erzeugenden elektrischen Spannungen abwechselnd in kurzer Schaltfolge an allen Elektroden anliegen.

13. Vorrichtung gemäß einem der Ansprüche 10 bis 12, dadurch gekennzeichnet, daß bei wenigstens sechs Elektroden die Einrichtung so ausgeführt ist, daß die die beiden Drehfelder erzeugenden elektrischen Spannungen an verschiedenen, mindestens je drei Elektroden anliegen.

14. Vorrichtung gemäß einem der Ansprüche 10 bis 13, dadurch gekennzeichnet, daß die Einrichtung so ausgeführt ist, daß bei Wahl einer bestimmten Drehfrequenz die Einrichtung zwei die beiden Drehfelder erzeugende elektrische Spannungen abgibt, wobei die Frequenz des einen Drehfeldes das 1/n-fache und die Frequenz des anderen Drehfeldes das n-fache der bestimmten Drehfrequenz beträgt und wobei die Intensität der beiden Drehfelder gleich ist.

15. Vorrichtung nach Anspruch 14, dadurch gekennzeichnet, daß die Einrichtung so ausgeführt ist, daß die Zahl n in einem vorgegebenen Bereich wählbar ist.

16. Vorrichtung nach einem der Ansprüche 10 bis 15, dadurch gekennzeichnet, daß die die Drehfelder erzeugenden elektrischen Spannungen sinusförmige Spannungen sind.

17. Verwendung der Vorrichtung gemäß einem der Ansprüche 10 bis 16 zur Unterscheidung von Zellinhaltstoffe wie Proteine und/oder Glycoproteine, Hormone oder sog. Wachstums-Faktoren sezernierenden Zellen von Zellinhaltstoffe nicht sezernierenden Zellen der gleichen Art oder Gattung.

18. Verwendung der Vorrichtung gemäß einem der Ansprüche 10 bis 16 zur Messung der das Rotationsverhalten von Teilchen bzw. Partikeln bestimmenden elektrischen und gegebenenfalls von diesen ableitbaren mechanischen Größen.

## Claims

1. Method for distinguishing corpuscles or particles, especially cells, which are situated in a medium and which are rotatable about an axis of rotation parallel to the axis of rotation of at least one rotating electric field and which belong to at least two corpuscle or particle groups, characterized in that the corpuscles or particles, of which the corpuscles or particles of one of the groups are distinguished from the other by specific electrical and/or mechanical properties influencing the rotation behaviour, are exposed to rotating-field forces which are generated by two rotating electric fields and which have opposite directions of rotation, in such a manner that the corpuscles or particles of one of the corpuscle groups are distinguished from the corpuscles or particles of the other corpuscle group by their rotation behaviour.

2. Method according to Claim 1, characterized in that the respective frequency of rotating and the intensity of the rotating fields are selectively dimensioned so that either the field forces acting on the corpuscles or particles of one of the groups or those acting on the corpuscles or particles of the other group exactly balance one another and thereby the corpuscles or particles exposed to the compensated rotating-field forces are not displaced into rotation.

9

3. Method according to Claim 2, characterized in that the rotating electric fields exhibiting the opposite direction of rotation have equal intensity.

4. Method according to Claim 3, characterized in that the frequency of rotation of one of the rotating fields is 1/n times and the frequency of rotation of the other rotating field is n times that characteristic frequency of rotation which is applicable in each instance for the corpuscles or particles which are not to be displaced into rotation.

5. Method according to Claim 1, characterized in that the frequency of rotation and the intensity of the rotating fields are dimensioned so that the resultant rotating-field forces have differing effects on the corpuscles or particles insofar as the corpuscles or particles belonging to different groups rotate with a differing direction of rotation.

6. Method according to Claim 5, characterized in that the rotating electric fields exhibiting the opposite direction of rotation have equal intensity.

7. Method according to Claim 6, characterized in that the frequency of rotation of one of the rotating fields is 1/n times and the frequency of rotation of the other rotating field is n times a frequency which is between the characteristic frequencies applicable for the different corpuscle or particle groups.

8. Method according to one of Claims 1 to 7, characterized in that the oppositely directed rotating electric fields act on the cells in temporal succession, the switching frequency being dimensioned so as to be so high that no disturbing oscillations of the corpuscles or particles occur.

9. Method according to one of Claims 1 to 7, characterized in that the oppositely directed rotating electric fields act simultaneously on the corpuscles or particles.

10. Device for carrying out the method according to one of claims 1 to 9, characterized by at least three electrodes which are disposed, forming between them an interspace for a chamber (K) containing the cells or a container or projecting into the chamber provided to receive the corpuscles or particles, in such a manner that the interspace or the chamber is exposed to a rotating electric field emanating from the electrodes, as well as by a device, connectable to the electrodes, for generating two rotating electric fields, generated by means of electric voltages, with opposite direction of rotation and respectively variable frequency of rotation.

11. Device according to Claim 10, characterized in that the intensity of the rotating fields is variable.

12. Device according to one of Claims 10 and 11, characterized in that the device is designed so that the electrical voltages generating the two rotating fields are applied to all electrodes alternately in a short switching sequence.

13. Device according to one of Claims 10 to 12, characterized in that, with at least six electrodes, the device is designed so that the electrical voltages generating the two rotating fields are applied to different electrodes, at least three electrodes in each case.

14. Device according to one of Claims 10 to 13, characterized in that the device is designed so that, in the case of the selection of a specified frequency of rotation, the device emits two electrical voltages generating the two rotating fields, the frequency of one of the rotating fields being 1/n times and the frequency of the other rotating field being n times the specified frequency of rotation, and the intensity of the two rotating fields being equal.

15. Device according to Claim 14, characterized in that the device is designed so that the number n is selectable within a predetermined range.

16. Device according to one of Claims 10 to 15, characterized in that the electrical voltages generating the rotating fields are sinusoidal voltages.

17. Use of the device according to one of Claims 10 to 16 to distinguish cells secreting cell-content substances such as proteins and/or glycoproteins, hormones or so-called growth factors from cells which do not secrete cell-content substances and which are of the same type or class.

18. Use of the device according to one of Claims 10 to 16 to measure the electrical quantities determining the rotation behaviour of corpuscles or particles and the mechanical quantities which are possibly derivable from said quantities.

**Revendications**

1. Procédé pour distinguer des fragments ou particules, notamment des cellules, se trouvant dans un milieu, susceptibles de tourner autour d'un axe parallèle à l'axe de rotation d'au moins un champ électrique tournant et appartenant à au moins deux groupes de fragments ou de particules, caractérisé en ce qu'il consiste à soumettre les fragments ou les particules, parmi lesquels les fragments ou les particules de l'un des groupes se distinguent des autres par des propriétés électriques et/ou mécaniques, spécifiques, influant sur le comportement en rotation, à des forces de champs tournants en sens inverse, produites par deux champs électriques tournants, de manière à distinguer les fragments ou particules de l'un des groupes des fragments ou particules de l'autre groupe par leur comportement en rotation.

2. Procédé suivant la revendication 1, caractérisé en ce qu'il consiste à donner au choix à la fréquence de rotation et à l'intensité des champs tournants des valeurs telles que les forces de champ agissant sur les fragments ou particules de l'un des groupes, ou les forces de champ agissant sur les fragments ou particules de l'autre groupe se compensent exactement, et qu'ainsi les fragments ou

**0 131 944**

particules soumis aux forces compensées de champs tournants ne sont pas mises en rotation.

3. Procédé suivant la revendication 2, caractérisé en ce que les champs électriques tournants qui ont des sens de rotation inverses, ont une même intensité.

4. Procédé suivant la revendication 3, caractérisé en ce que la fréquence de rotation de l'un des champs tournants représente 1/n fois et la fréquence de rotation de l'autre champ tournant représente n fois la fréquence de rotation caractéristique des fragments ou particules qui ne doivent pas être mis en rotation.

5. Procédé suivant la revendication 1, caractérisé en ce que la fréquence de rotation et l'intensité des champs tournants sont telles que les forces de champ tournant qui en résultent agissent différemment sur les fragments ou particules dans la mesure où les fragments ou particules appartenant à des groupes différents tournent dans des sens de rotation différents.

6. Procédé suivant la revendication 5, caractérisé en ce que les champs électriques tournants ayant des sens de rotation inverses ont la même intensité.

7. Procédé suivant la revendication 6, caractérisé en ce que la fréquence de rotation de l'un des champs tournants représente 1/n fois et la fréquence de rotation de l'autre champ tournant représente n fois une fréquence qui est comprise entre les fréquences caractéristiques des groupes différents de fragments ou particules.

8. Procédé suivant l'une des revendications 1 à 7, caractérisé en ce que les champs électriques tournants de sens inverses agissent successivement dans le temps sur les cellules, la fréquence de commutation étant si élevée qu'il ne se produit pas d'oscillation gênante des fragments ou particules.

9. Procédé suivant l'une des revendications 1 à 7, caractérisé en ce que les champs électriques tournants en sens inverses agissent simultanément sur les fragments ou particules.

10. Installation pour la mise en œuvre du procédé suivant l'une des revendications 1 à 9, caractérisé par au moins trois électrodes qui en formant entre elles un espace intermédiaire pour une chambre (K) ou pour un récipient contenant les cellules, ou en pénétrant dans la chambre prévue pour la réception des fragments ou des particules, sont disposées de façon que l'espace intermédiaire ou la chambre soit soumis à un champ électrique tournant issu des électrodes, ainsi que par un dispositif pouvant être relié aux électrodes et destiné à produire deux champs électriques de sens de rotation inverse et de fréquence de rotation variable, qui sont produits au moyen de tensions électriques.

11. Installation suivant la revendication 10, caractérisé en ce que l'intensité des champs tournants est variable.

12. Installation suivant l'une des revendications 10 et 11, caractérisée en ce que le dispositif est tel que les tensions électriques produisant les deux champs tournants sont appliquées alternativement et à brève cadence de commutation, à toutes les électrodes.

13. Installation suivant l'une des revendications 10 à 12, caractérisée en ce que dans le cas d'au moins six électrodes, le dispositif est tel que les tensions électriques produisant les deux champs tournants, s'appliquent à des électrodes différentes et au moins à trois électrodes.

14. Installation suivant l'une des revendications 10 à 13, caractérisée en ce que le dispositif est tel que, par le choix d'une fréquence de rotation déterminée, le dispositif fournit des tensions électriques produisant les deux champs tournants, la fréquence de l'un des champs tournants représentant 1/n fois et la fréquence de l'autre champ tournant représentant n fois la fréquence de la tension déterminée, et l'intensité des deux champs tournants étant la même.

15. Installation suivant la revendication 14, caractérisée en ce que le dispositif est tel que le nombre n peut être choisi dans une plage prescrite.

16. Installation suivant l'une des revendications 10 à 15, caractérisée en ce que les tensions électriques produisant les champs tournants sont des tensions sinusoïdales.

17. Utilisation de l'installation suivant l'une des revendications 10 à 16, pour distinguer des cellules secrétant des substances intracellulaires comme des protéines et/ou des glycoprotéines, des hormones ou ce que l'on appelle des facteurs de croissance, de cellules de même espèce ou de même genre qui ne secrètent pas de substances intracellulaires.

18. Utilisation de l'installation suivant l'une des revendications 10 à 16, pour mesurer les grandeurs électriques déterminant le comportement à la rotation des fragments ou particules, et le cas échéant, de grandeurs mécaniques en dérivant.

11

FIG. 1

HAUPT-OSZILLATOR

$4n \cdot f_G$

FREQUENZ-ZÄHLER UND ANZEIGE

÷ 4

÷ n

$4 \cdot f_G$

÷ n

$\frac{4}{n} \cdot f_G$

LINKS-RECHTS SCHIEBEREGISTER

$4nf_G$, $\frac{4}{n} \cdot f_G$

LINKS    RECHTS

SINUS GENERATOR

G

AUSGANGS-VERSTÄRKER

$n \cdot f_G$, $\frac{1}{n} \cdot f_G$

K

ELEKTRODEN

GENERATOR ZUR ERZEUGUNG DER SCHALTFREQUENZ

0 131 944

# FIG. 2

0 131 944

GENERATOR VON
$nf_G$ UND $\frac{1}{n} \cdot f_G$

DREHMOMENT
ODER
ROTATIONS-
GESCHWINDIGKEIT

$f_C$

DREHFELDFREQUENZ (LOG.)

FIG.3a

DREHMOMENT
ODER
ROTATIONS-
GESCHWINDIGKEIT

$f_G$

DREHFELDFREQUENZ (LOG.)

FIG.3b

DREHMOMENT
ODER
ROTATIONS-
GESCHWINDIGKEIT

$f_G$

DREHFELDFREQUENZ (LOG.)

FIG.3c

DREHMOMENT
ODER
GESCHWINDIGKEIT

$f_G$

$f_C$

FIG.3d

3